# EUROPEAN PATENT SPECIFICATION

(11) **EP 1 852 343 B1**
(45) Date of publication and mention of the grant of the patent: **13.06.2012**
(21) Application number: 07008299.5
(22) Date of filing: 24.04.2007
(51) Int. Cl.: B62M 3/00

(54) **Bicycle crank arm assembly**
Fahrradkurbelarmanordnung
Ensemble de bras de manivelle pour bicyclette

(30) Priority: 04.05.2006 IT MI20060876
(43) Date of publication of application: 07.11.2007
(73) Proprietor: CAMPAGNOLO S.r.l., 36100 Vicenza (VI) (IT)
(72) Inventor: Meggiolan, Mario, 36051 Creazzo (Vicenza) (IT)
(74) Representative: Checcacci, Giorgio

(56) References cited:
- EP-A- 1 659 057
- FR-A- 2 870 508
- US-A- 3 347 112

## Description

The invention concerns a bicycle crank arm assembly, i.e. an assembly of components of a bottom bracket assembly of a bicycle transmission that comprises a crank arm and at least one central axle portion on which the crank arm is mounted. The invention also concerns a method for assembling such an assembly.

In relation to a central axle and to a crank arm of a bicycle transmission, by "coupling" the mutual mechanical interaction is meant between axle and crank arm that makes the two elements integral in rotation about the axis of the bottom bracket assembly, allowing the transmission of torque, i.e. power, between the crank arm and the axle, In the same context, on the other hand, by "attachment" the mutual mechanical interaction is meant that makes the two elements integral in translation in the sense of the axis of the bottom bracket assembly, preventing the crank arm from slipping off, thus ending the coupling.

Hereafter, reference shall be made to an "axle portion", by this meaning both the entire axle and possibly just the portion thereof with which the crank arm is coupled and fixed; such a portion shall then be associated with another axle portion, with techniques and modes not covered by the present invention, so as to restore the structural integrity of the axle as a whole.

The coupling between the ends of the central axle and a crank arm of the bicycle is typically, according to the prior art, a shape coupling, normally carried out through a grooved or polygonal profile, formed both on the aforementioned ends, and in suitable housing seats made at the ends of the elongated body of which each of the two crank arms of the bicycle consists. A fastening screw or other analogous element also ensures the attachment between the axle and the crank arm, avoiding the crank arm being able to slip off from the axle.

By their nature, shape coupling and attachment through screws have a degree of imprecision that allows small relative displacements between the crank arm and the axle.

In order to reduce the overall weight of the bottom bracket assembly and to simplify the production process, it has been proposed to eliminate the screw and to prevent the slipping of the crank arm through forcing. An example of such an approach is given by WO 2005/058682, in which the right crank arm is coupled with the axle through a grooved coupling; the coupling profiles of the axle and of the right crank arm have a tolerance such as to make a forced coupling that prevents slipping (paragraphs 33 and 34 on pages 33 and 34).

The inventor of the present invention has found that with a forced coupling of the type provided by WO 2005/058682 the force necessary for the crank arm to slip off from the axle does not have a constant value but can vary within very wide limits. In the insertion step the crank arm is guided for a very short portion and can advance in a direction not parallel to the axle portion, causing deformations that make the coupling less precise than expected. The variable slipping force is a visible effect of this phenomenon.

The inventor of the present invention has realised that the contact between the materials of the crank arm and of the axle, in association with the imprecision of the grooved coupling and in particular with the relative displacements that derive from it in operation, creates conditions suitable for the occurrence of corrosion phenomena, both in the forced coupling and even more so in the conventional coupling with attachment screw.

The document FR 2 870 508 A discloses a system according to the preambles of claim 1 and 19, having a crank set mechanism constructed around a central axle inserted inside a right pedal crank. The axle is glued to the crank by means of a suitable resin and maintained in place perpendicular with respect to the crank using a pin (3).

A problem forming the basis of the present invention is to make a crank arm assembly in which the coupling area between crank arm and axle is protected from corrosion, irrespective of the precision with which the shape coupling is made.

The inventor of the present invention has also realised that, in case of a forced coupling, the crank arm assembly obtained could disassemble due to the fact that it is not possible to ensure a predetermined slipping force.

A second problem forming the basis of the present invention is therefore to make a crank arm assembly that at the same time has a lower overall weight, a simple assembling process and suitable resistance to disassembling.

In its most general terms, the present invention therefore concerns, in a first aspect thereof, a bicycle crank arm assembly according to claim 1 and, in a second aspect thereof, an assembly method according to claim 19. Preferred characteristics are given in the dependent claims.

More specifically, according to the first aspect of the invention, the bicycle crank arm assembly comprises at least one axle portion, a crank arm mounted on said at least one axle portion, the crank arm having a coupling seat and the axle portion having a coupling portion coupled to the coupling seat, the coupling seat and the coupling portion being shaped so as to make a shape coupling to ensure that the crank arm can transmit a torque to the axle portion and an adhesive material provided between the coupling seat and the coupling portion, characterised in that the adhesive material is provided in a gluing chamber formed in at least one of said coupling seat and said coupling portion.

The adhesive material preferably has the dual effect of sealing the coupling area and of preventing the relative displacements between the crank arm and the axle portion. Both of these effects contribute to reducing, if not cancelling out, the possibility that corrosion phenomena begin, irrespective of the degree of precision of the shape coupling or the type of attachment system adopted.

Preferably, the coupling seat comprises a shoulder for supporting the axle portion in the axial sense, and possibly the shoulder completely closes the coupling seat in the axial direction. Such a shoulder ensures the correct positioning in the axial sense of the axle portion with respect to the crank arm.

The adhesive material is provided between the coupling seat and the coupling portion, and preferably it completely seals the coupling portion to the coupling seat. It is thus ensured that there is complete protection of the coupling means from external agents such as dirt and humidity, and therefore the creation of corrosion phenomena is countered in the contact areas between the material of the crank arm and the material of the axle portion.

The crank arm assembly comprises a gluing chamber formed in at least one of the coupling seat and the coupling portion, the adhesive material being provided in the chamber. The presence of a specific gluing chamber where it is possible to insert a predetermined amount of adhesive material allows a certain barrier against the penetration of external atmospheric agents into the most inner coupling areas to be arranged in a preferred position. Moreover, it allows the gluing conditions, and in particular the adhesion force obtained, to be best controlled in the embodiments in which this is important to prevent the crank arm from slipping off.

Even more preferably the adhesive material is present both in the gluing chamber, and at least in part of the remaining space between the coupling seat and the coupling portion. In this way polluting agents or humidity are prevented from remaining trapped in the inner most coupling areas.

The gluing chamber can take up different shapes, just as it may be just one or else there can be many, concentrated in one or more areas or else distributed between the crank arm and the axle portion. The gluing chamber can comprise an annular channel in the crank arm, formed in the coupling seat, and/or an annular channel in the axle portion, formed in the coupling portion. The gluing chamber can also comprise a free space, left free between the coupling seat and the coupling portion by a tapered front area of the coupling portion itself. Such a tapered front area preferably has an axial extension less than or equal to 1/3 the coupling portion; preferably, the tapered front area has an axial extension equal to 2 ÷ 5 mm.

Preferably, the annular channel is localised in the axial sense in a remote position with respect to the centre of the bottom bracket assembly. The effective adhesion is indeed greater in this area, which during use of the bicycle is stressed more and thus is more subject to localised deformations that could - if not countered - lead to the attachment being lost.

The adhesive material can be of different types. Preferably, the adhesive material is a setting resin, more preferably a thermosetting resin, such as an epoxy or phenolic resin. In this way it is possible to more easily control both the distribution of the adhesive material when its adhesive properties have not yet been activated, and the final adhesion force.

In a preferred embodiment, the crank arm assembly comprises fastening means to ensure that the coupling means remain engaged with the crank arm and the axle portion, the fastening means comprising the adhesive material.

In this way the shape coupling ensures that the crank arm and the axle portion are integral in rotation, whereas the gluing ensures a predetermined minimum force limit necessary to disassemble the crank arm assembly. The crank arm assembly at the same time has a lower overall weight, a simple assembling process and a suitable resistance to disassembling. Moreover, the axle portion and the crank arm do not require special processing and the assembling process is simple and cost-effective.

The fastening means also preferably comprise a mechanical forcing of the coupling portion of the axle portion in the coupling seat of the crank arm. The combination of mechanical forcing and adhesive material allows the best attachment conditions to be achieved, i.e. it allows the force necessary to disassemble the crank arm from the axle portion to be determined in the most certain way.

According to the second aspect of the invention, more specifically the method for assembling a crank arm to an axle portion of a bottom bracket assembly of a bicycle transmission comprises the shape coupling between the crank arm and the axle portion to ensure that the crank arm can transmit a torque to the axle portion, characterised by applying adhesive material in a gluing chamber, formed in at least one of the crank arm, and the axle portion.

Preferably, the adhesive material is applied to one of the crank arm and the axle portion before they are engaged, after which the crank arm and the axle portion are forced in the axial sense. In this way a good distribution of the adhesive material between them is obtained in a simple way.

Further characteristics and advantages of the present invention shall become clearer from the following detailed description of some preferred embodiments thereof, made with reference to the enclosed drawings. In such drawings,
- figure 1 is a section view in the axial sense of a bottom bracket assembly of a bicycle transmission that incorporates crank arm assemblies according to the invention;

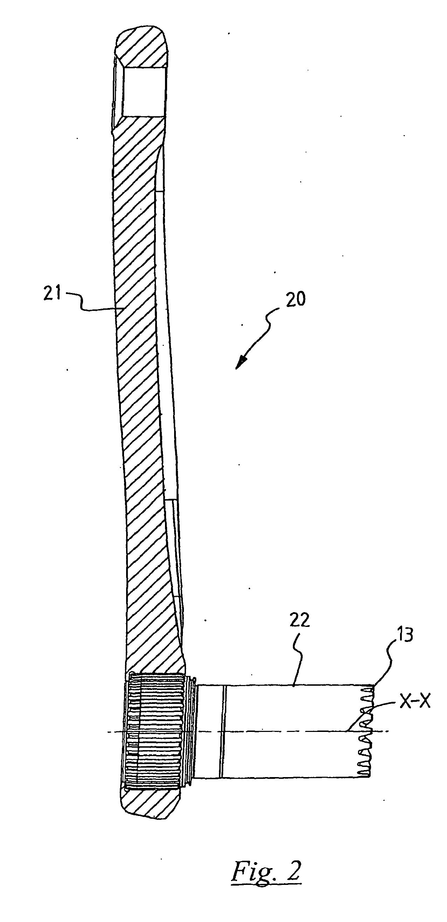

- figure 2 is a section view in the axial sense of the left crank arm assembly of figure 1;
- figure 3 and figure 4 are, respectively, an axonometric view and a section view in the axial sense of the assembly of figure 2, represented with separated parts;
- figure 5 is an enlarged section view in the axial sense of a detail of the crank arm assembly of figure 2;
- figures 6, 7 and 10 are section views similar to that of figure 5, referring to different embodiments;
- figure 8 is a transversal section view along the line VIII-VIII of a detail of the assembly of figure 1;
- figure 9 is a section view similar to that of figure 8, referring to a different embodiment.

In the figures, a bottom bracket assembly of a bicycle transmission is wholly indicated with 10; just the frame box 11 of the bicycle that supports the bottom bracket assembly 10 is illustrated.

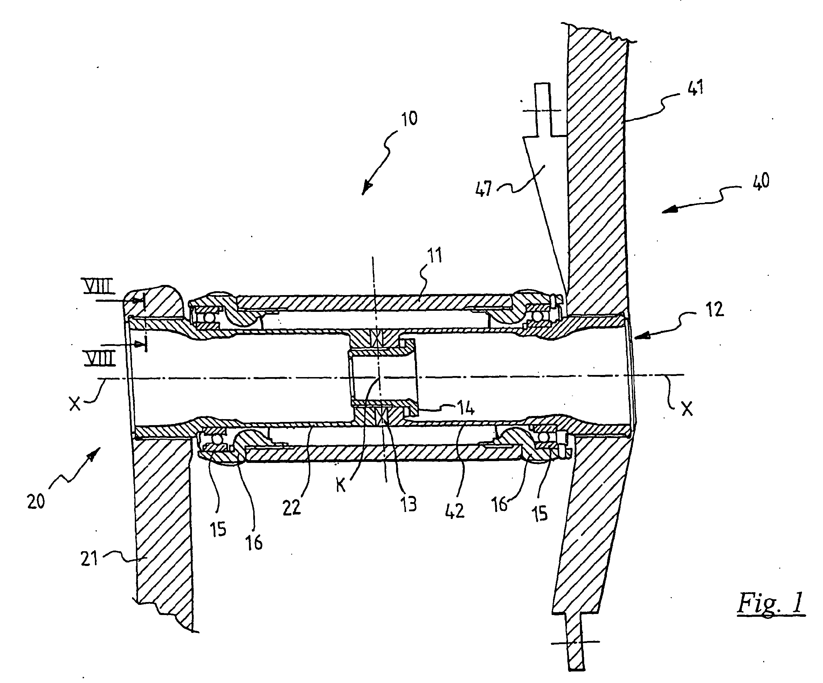

With reference in particular to figure 1, the bottom bracket assembly 10 comprises two crank arm assemblies 20 and 40, left and right, each of which comprises a crank arm 21 and 41 and an axle portion 22 and 42, respectively. The two axle portions 22 and 42 are substantially the same as each other and are integral in rotation through a coupling with front teeth 13 and a lock nut 14, only schematically represented since they are *per se* conventional, so as to form, in use, an axle assembly, globally indicated with 12. It should be noted that in other embodiments (not shown) two different axle portions could be provided, and one of the two portions could even be left out whereas the other could comprise the entire axle.

The right crank arm assembly 40 differs from the left crank arm assembly 20 in that it also comprises - according to widely accepted practice - spokes 47, intended for engagement with crowns, not illustrated. Hereafter, the left crank arm assembly 20 shall be described, being understood that what has been stated is also valid for the right crank arm assembly 40.

The axle 12 is rotatably supported in the frame box 11 about a main axis X of the bottom bracket assembly 10, for example through rolling bearings 15 mounted on adapter supports 16, fixed projecting axially from the frame box 11.

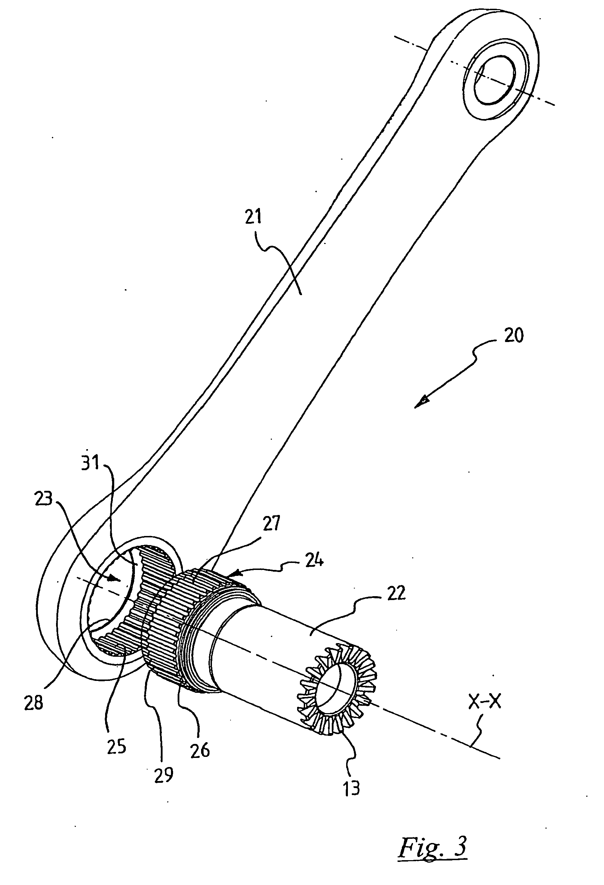

In the left crank arm assembly 20, the crank arm 21 and the axle portion 22 are engaged with each other through coupling means, to allow the transmission of a torque from the crank arm 21 to the axle portion 22 (as represented in FIG.3), and fastening means to prevent the disengagement of the coupling means.

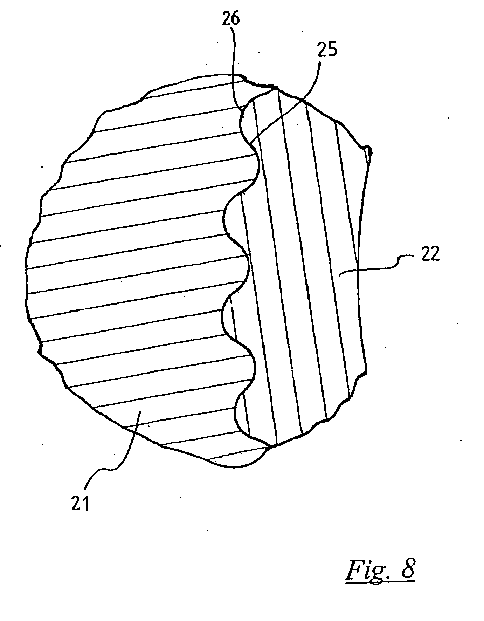

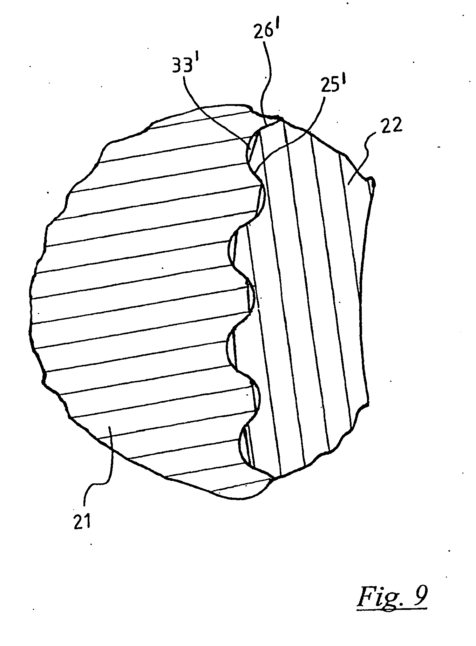

The coupling means comprise a coupling seat 23 formed in the crank arm 21 and a coupling portion 24 formed on the axle portion 22; the seat 23 and the portion 24 are shaped so as to make a shape coupling, for example according to a grooved profile. Such a grooved profile, as shown in detail in figure 8, is for example and preferably of the type described in European patent application number 05425376 to the same Applicant, in which a profile 25 in the seat 23 and a matching profile 26 on the axle portion 24 follow a succession of matching waves. In a different embodiment, shown in figure 9, a similar grooved profile is provided, with grooved profiles 25' in the seat 23 and 26' on the axle portion 24 that differ from the profiles 25 and 26 in that the crests of the waves both in the seat 23 and in the portion 24 are levelled, so as to leave empty spaces 33' between the two profiles 25' and 26'.

The tolerances of the matching profiles 25 and 26 (or 25' and 26') are such as to make a forced coupling between the crank arm 21 and the axle portion 22.

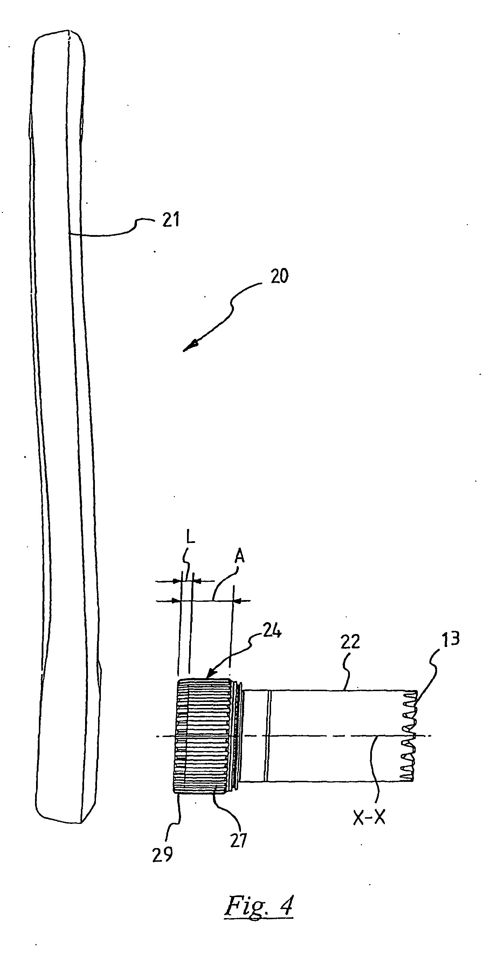

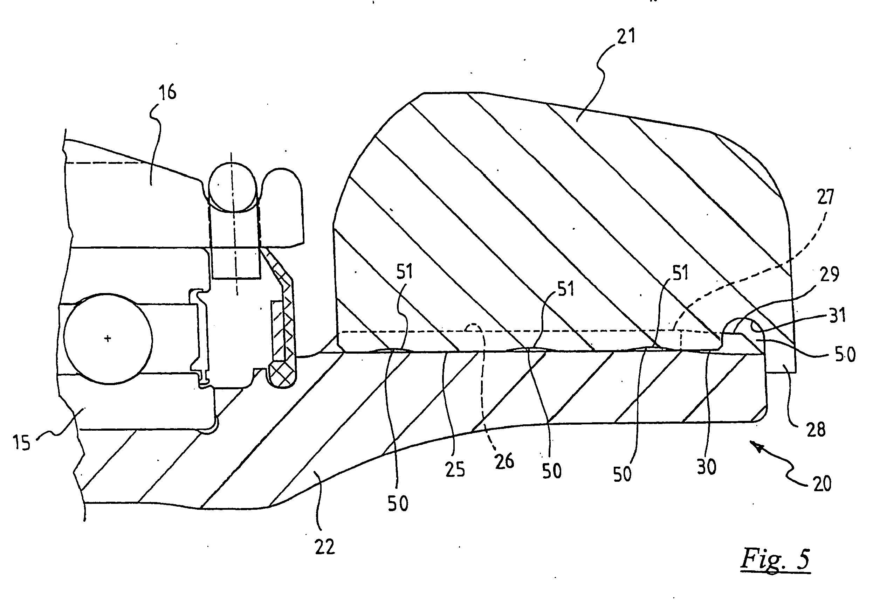

As can be seen in figure 3, as well as in figures 5 to 7, the coupling seat 23 extends in the body of the crank arm 21 axially along the axis X and comprises a shoulder 28 at the end facing in the opposite direction to the centre K of the bottom bracket assembly 10. The shoulder 28 can simply project in the radial sense towards the axis X, or else (in a different embodiment, not illustrated) it can extend up to the same axis X, thus completely closing the seat 23. The coupling portion 24 comprises a main portion 27 with generatrices substantially parallel to the axis X and a tapered front area 29 both in the peaks and in the channels of the grooved profile. The front area 29 has the function of an insertion guide portion, and it extends for a length L (represented in figure 4) in the sense from the axis X, so as to leave a free space 30 between the coupling seat 23 in the crank arm 21 and the coupling portion 24 of the axle portion 22. The length L is preferably less than or equal to 1/3 the axial extension A of the entire coupling portion 24, and even more preferably is between 1/6 and 1/3 of A, i.e. - in absolute terms - between 2 and 5 mm.

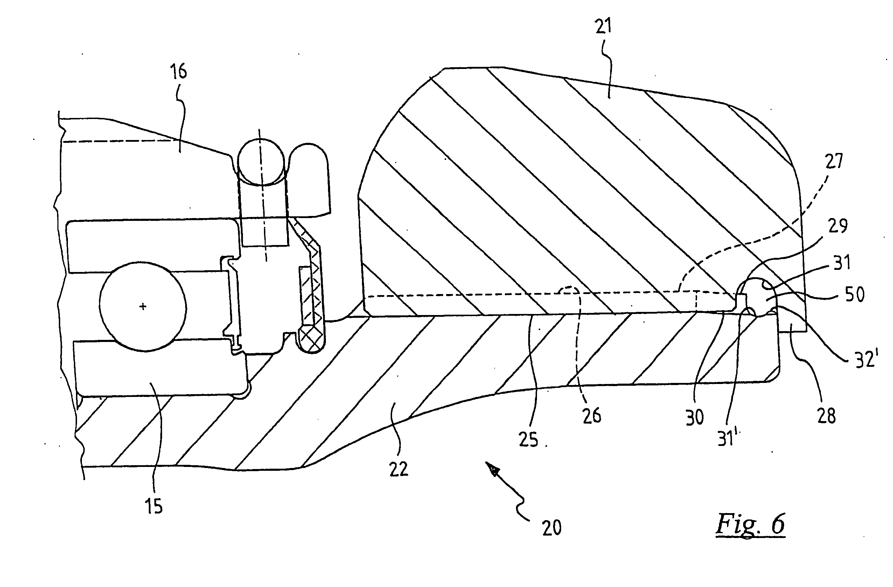

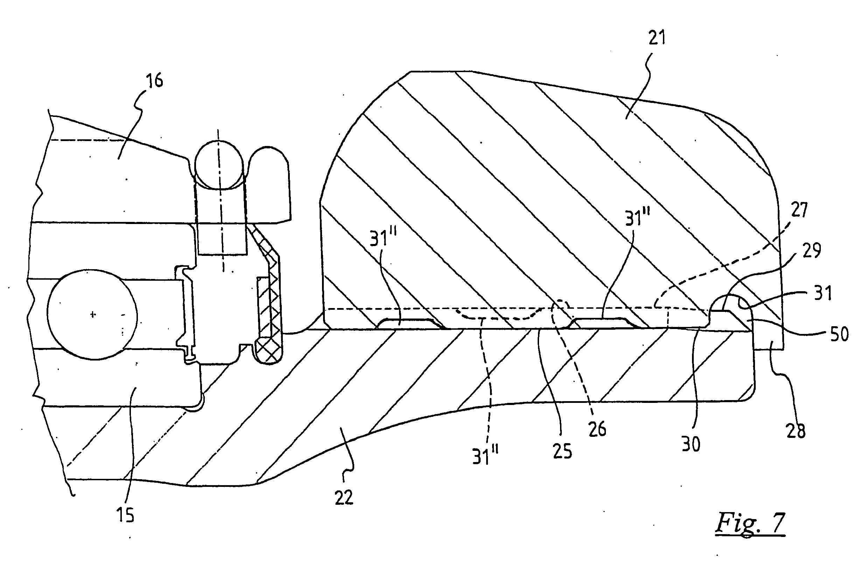

The crank assembly 20 also comprises an annular channel 31, formed in the coupling seat 23 in a position adjacent to the shoulder 28, as can be seen in figure 5. In the embodiments of figures 6 and 7, respectively, a channel 31' is formed in the coupling portion 24 opposite the channel 31, and two further channels 31" are formed in the coupling seat 23, axially spaced from the shoulder 28 and from the channel 31.

In assembling the crank arm assembly 20, with reference above all to figures 3 and 4, initially the annular channel 31 of the crank arm 20 is filled with an adhesive material, generically indicated with 50 in the figures. The adhesive material 50 is a setting resin, preferably thermosetting, selected, for example, from an epoxy resin and a phenolic resin, where the former is preferred. According to a first preferred embodiment, the amount of adhesive material 50 applied corresponds exactly to the capacity of the channel 31, so that a single sealing cord is formed inside the latter.

According to a second preferred embodiment, the adhesive material 50 is arranged in the channel 31 in an amount in excess of its capacity.

The front guide area 29 of the axle portion 22 is then inserted into the coupling seat 23 of the crank arm 21, and the axle portion 22 is forced to penetrate into the crank arm 21 applying a suitable insertion force in the axial sense.

The front guide area 29 of the axle portion 22 is made to advance in the coupling seat 23 of the crank arm 21 until it abuts against the shoulder 28. In this step, the adhesive material 50, if placed in excess, is pushed out from the annular channel 31, and - due to the mechanical forcing - penetrates between the grooved profile 25 and the grooved profile 26.

At this point the crank arm assembly 20 is taken into conditions such as to cause the setting of the adhesive 50. In particular, if the adhesive 50 is thermosetting, the crank arm assembly 20 is taken to the setting temperature of the adhesive material itself, and is kept at such a temperature until it is completely solidified. Typical temperature values are between 120° and 180°, for a time of between 10 and 60 minutes.

In the aforementioned way, the adhesive 50 with the channels 31 (and possibly 31', 31") contributes to constituting the fastening means of the crank arm 21 to the axle portion 22.

Between the crank arm 21 and the axle portion 22 a gluing chamber is thus formed from the annular channel 31 and from the free space 30; in the embodiments of figures 6 and 7, the channels 31' and 31" are respectively added. By suitably calibrating the size of the annular channel 31 and of the free space 30 (length L) it is possible to obtain a gluing area that allows the desired extraction force values of the crank arm 21 to be obtained, typically between 30 and 40 kN.

It should be noted that preferably the fastening means of the crank arm 20 and of the axle portion 22 comprise a forced coupling in addition to the adhesive material 50.

It should also be noted that in some crank arm assemblies 20, gaps 51 (purposefully represented substantially enlarged in figure 5) can be created between the profile 25 and the profile 26, due to processing defects or embossing due to inaccurate insertion of the axle portion 22. In these assemblies, the small sizes of the gaps and the fluidity of the adhesive material before it has set promote penetration into the gaps 51 by capillarity, making it possible to wet the entire coupling area even from one extreme to the other and thus maximising protection against corrosion, and the attachment effect of the crank arm.

It should be noted that in the embodiment illustrated in figure 6, the channel 31' defines a radially projecting edge 32' that remains enclosed in the adhesive material 50 present in the channels 31 and 31' once set; in this way, in addition to the adhesive effect, there is a mechanical holding effect of the crank arm 21.

The additional channels 31' and 31" are preferably annular.

It should also be noted that in the embodiment of figure 7, the channels 31" can be made both on the coupling portion 24 and on the coupling seat 23, as well as on both of the elements.

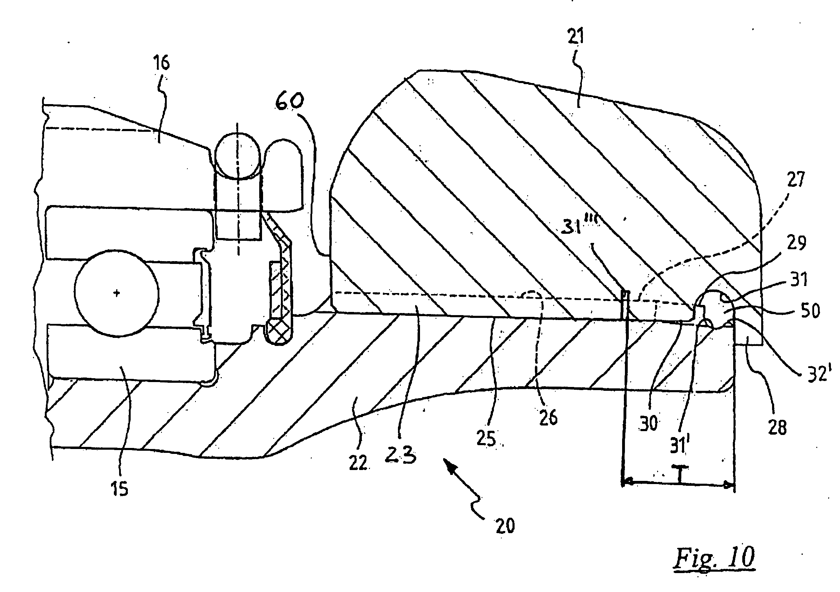

The additional channels 31" can be one or more than one, as illustrated in figure 7. The embodiment of figure 10 shows a particular additional channel 3'" in the coupling seat 23, which is deeper than the grooves of the grooved profile 25 of the coupling seat 23. Preferably, the additional channel 31"' is closer to the shoulder 28 than to the side wall 60 of the crank arm 21 facing the bicycle's frame box 11. A preferred range of distance T is between 1 to 15 mm. In figure 10 the channel 31' is optional.

The additional channel 31'" advantageously performs as a chip breaker during the machine operation to obtain the grooved profile 25 of the coupling seat 23. A preferred machine operation consist of broaching the coupling seat 23 by inserting a tool (not shown) from the side of the side wall 60 and by moving the tool until it reaches the channel 31. Since the coupling seat 23 is closed by the shoulder 28 the tool has a limited stroke, and the additional channel 31'" avoids the chip to remain attached to the crank arm inside the channel 31. This is also useful in case of a completely blind coupling seat

It should also be noted that the crank arms 21 and 41 are made from metal material, such as aluminium or titanium alloys, and that the axle portions 22 are made from steel or light metal alloys.

## Claims

1. Bicycle crank arm assembly (20, 40), comprising at least one axle portion (22, 42), a crank arm (21, 41) mounted on said at least one axle portion (22, 42), the crank arm (21, 41) having a coupling seat (23) and the axle portion (22, 42) having a coupling portion (24) coupled to the coupling seat (23), the coupling seat (23) and the coupling portion (24) being shaped so as to make a shape coupling to ensure that the crank arm (21, 41) can transmit a torque to the axle portion (22, 42) and an adhesive material provided between the coupling seat (23) and the coupling portion (24), **characterised in that** the adhesive material is provided in a gluing chamber (30, 31; 31'; 31") formed in at least one of said coupling seat (23) and said coupling portion (24).

2. Assembly according to claim 1, wherein the coupling seat (23) comprises a shoulder (28) for supporting the axle portion (22, 42) in a axial sense.

3. Assembly according to claim 2, wherein the shoulder (28) completely closes the coupling seat (23) in the axial direction.

4. Assembly according to claim 1, wherein the adhesive material (50) completely seals the coupling portion (24) to the coupling seat (23).

5. Assembly according to claim 1, wherein said adhesive material (50) is present both in said gluing chamber (30, 31; 31'; 31"), and at least in part of a remaining space (51) between the coupling seat (23) and the coupling portion (24).

6. Assembly according to claim 1, wherein said gluing chamber comprises an annular channel (31; 31") in the crank arm (21, 41), formed in the coupling seat (23), and/or an annular channel (31') in the axle portion (22, 42), formed in the coupling portion (24).

7. Assembly according to claim 6, wherein the annular channel (31; 31') is located in an axial sense in a remote position with respect to a centre (K) of the bottom bracket assembly (10).

8. Assembly according to claim 1, wherein said gluing chamber comprises a free space (30), left free between the coupling seat (23) and the coupling portion (24) by a tapered front area (29) of the coupling portion (24) itself.

9. Assembly according to claim 8, wherein said tapered front area (29) has an axial extension less than or equal to 1/3 an axial extension of the coupling portion (24).

10. Assembly according to claim 8, wherein said tapered front area (29) has an axial extension equal to 2 - 5 mm.

11. Assembly according to claim 1, wherein the adhesive material (50) is a setting resin.

12. Assembly according to claim 11, wherein the setting resin (50) is a thermosetting resin, such as an epoxy or phenolic resin.

13. Assembly according to claim 1, further comprising fastening means to ensure that the coupling means remain engaged with the crank arm (21, 41) and the axle portion (22, 42), the fastening means comprising an adhesive material (50).

14. Assembly according to claim 13, wherein the fastening means further comprise a mechanical forcing of the coupling portion (24) of the axle portion (22, 42) in the coupling seat (23) of the crank arm (21, 41).

15. Assembly according to claim 1 wherein the coupling seat (23) comprises at least one chip breaker channel (31"').

16. Assembly according to claim 15 wherein the coupling seat comprises a grooved profile (25) and the chip breaker channel (31"') is deeper than the grooves of said grooved profile (25).

17. Assembly according to claim 15 wherein the coupling seat extends between an outer side wall (60) of the crank arm (21) and a shoulder (28) supporting the axle portion (22, 42) in an axial sense, and wherein the chip breaker channel (31"') is closer to the said shoulder (28) than to said outer side wall (60).

18. Assembly according to claim 17, wherein the distance between the chip breaker channel (31"') and the shoulder (28) is between 1 and 15 mm.

19. Method for assembling a crank arm (21, 41) to an axle portion (22, 42) of a bottom bracket assembly (10) of a bicycle transmission, comprising shape coupling between the crank arm (21, 41) and the axle portion (22, 42) to ensure that the crank arm (21, 41) can transmit a torque to the axle portion (22, 42), **characterised by** applying adhesive material (50) in a gluing chamber (31; 31'; 31"), formed in at least one of the crank arm (21, 41) and the axle portion (22, 42).

20. Method according to claim 19, wherein the adhesive material (50) is applied to one of the crank arm (21, 41) and the axle portion (22, 42) before they are engaged, after which the crank arm (21, 41) and the axle portion (22, 42) are forced in the axial sense.

21. Method according to claim 19, wherein the adhesive material (50) is a setting resin.

22. Method according to claim 21, wherein the setting resin (50) is a thermosetting resin, such as an epoxy or phenolic resin.

23. Method according to claim 19 wherein at least one chip breaker channel (31"') is realized in the coupling seat (23).

24. Method according to claim 23, wherein a grooved profile is realized by machine operation in the coupling seat (23).

25. Method according to claim 24, wherein the machine operation is a broaching operation.

## Patentansprüche

1. Fahrradtretlagerkurbelarm-Anordnung (20, 40), enthaltend wenigstens einen Achsabschnitt (22, 42), einen Kurbelarm (21, 41), der an dem wenigstens einen Achsabschnitt (22, 42) angebracht ist, wobei der Kurbelarm (21, 41) einen Kopplungssitz (23) hat und der Achsabschnitt (22, 42) einen Kopplungsabschnitt (24) hat, der mit dem Kopplungssitz (23) gekoppelt ist, und der Kopplungssitz (23) sowie der Kopplungsabschnitt (24) derart ausgebildet sind, dass ein Formschluss hergestellt wird, um sicherzustellen, dass der Kurbelarm (21, 41) ein Drehmoment auf den Achsabschnitt (22, 42) übertragen kann, und ein Haftmaterial, das zwischen dem Kopplungssitz (23) und dem Kopplungsabschnitt (24) vorgesehen ist, **dadurch gekennzeichnet, dass** das Haftmaterial in einer Klebekammer (30, 31; 31'; 31") vorgesehen ist, die in dem Kopplungssitz (23) und/oder dem Kopplungsabschnitt (24) ausgebildet ist.

2. Anordnung nach Anspruch 1, bei der der Kopplungssitz (23) eine Schulter (28) enthält, um den Achsabschnitt (22, 42) in einer Achsrichtung zu halten.

3. Anordnung nach Anspruch 2, bei der die Schulter (28) den Kopplungssitz (23) in der Achsrichtung komplett umschließt.

4. Anordnung nach Anspruch 1, bei der das Haftmaterial (50) den Kopplungsabschnitt (24) an den Kopplungssitz (23) vollständig andichtet.

5. Anordnung nach Anspruch 1, bei der das Haftmaterial (50) sowohl in der Klebekammer (30; 31; 31'; 31") als auch wenigstens in einem Teil eines verbleibenden Zwischenraums (51) zwischen dem Kopplungssitz (23) und dem Kopplungsabschnitt (24) vorhanden ist.

6. Anordnung nach Anspruch 1, bei der die Klebekammer einen ringförmigen Kanal (31; 31") in dem Kurbelarm (21, 41), der in dem Kopplungssitz (23) ausgebildet ist, und/oder einen ringförmigen Kanal (31") in dem Achsabschnitt (22, 42) enthält, der in dem Kopplungsabschnitt (24) ausgebildet ist.

7. Anordnung nach Anspruch 6, bei dem sich der ringförmige Kanal (31; 31') in einer Achsrichtung in einer entfernten Position im Bezug auf ein Zentrum (K) der Tretlageranordnung (10) befindet.

8. Anordnung nach Anspruch 1, bei der die Klebekammer einen freien Zwischenraum (30) enthält, der zwischen dem Kopplungssitz (23) und dem Kopplungsabschnitt (24) durch einen konischen Frontbereich (29) des Kopplungsabschnittes (24) an sich freibleibt.

9. Anordnung nach Anspruch 8, bei der der konische Frontbereich (29) eine Achsausdehnung hat, die kleiner oder gleich 1/3 einer Achsausdehnung des Kopplungsabschnittes (24) ist.

10. Anordnung nach Anspruch 8, bei der der konische Frontbereich (29) eine Achsausdehnung gleich 2 bis 5 mm hat.

11. Anordnung nach Anspruch 1, bei der das Haftmaterial (50) ein aushärtendes Harz ist.

12. Anordnung nach Anspruch 11, bei dem das aushärtende Harz (50) ein durch Wärme aushärtendes Harz ist, wie etwa Epoxy- oder Phenolharz.

13. Anordnung nach Anspruch 1, weiterhin enthaltend Befestigungseinrichtungen um sicherzustellen, dass die Kopplungseinrichtungen mit dem Kurbelarm in (21, 41) und dem Achsabschnitt (22, 42) in Eingriff bleiben, wobei die Befestigungseinrichtungen ein Haftmaterial (50) enthalten.

14. Anordnung nach Anspruch 13, bei der die Befestigungseinrichtungen weiterhin einen Kraftschluss des Kopplungsabschnittes (24) des Achsabschnittes (22, 42) in dem Kopplungssitz (23) des Kurbelarms (21, 41) beinhalten.

15. Anordnung nach Anspruch 1, bei der der Kopplungssitz (23) wenigstens einen Spanbrechkanal (31"') enthält.

16. Anordnung nach Anspruch 15, bei dem der Kopplungssitz ein Rillenprofil (25) aufweist und der Spanbrechkanal (31"') tiefer ist als die Rillen des Rillenprofils (25).

17. Anordnung nach Anspruch 15, bei der sich der Kopplungssitz zwischen einer äußeren Seitenwand (60) des Kurbelarms (21) und einer Schulter (28) erstreckt, die den Achsabschnitt (22, 42) in der Achsrichtung hält, und bei der sich der Spanbrechkanal (31"') dichter an der Schulter (28) befindet als an der äußeren Seitenwand (60).

18. Anordnung nach Anspruch 17, bei der der Abstand zwischen dem Spanbrechkanal (31"') und der Schulter (28) zwischen 1 und 15 mm beträgt.

19. Verfahren zum Anbringen eines Kurbelarmes (21, 41) an einem Achsabschnitt (22, 42) einer Tretlageranordnung (10) einer Fahrradübersetzung, umfassend den Formschluss zwischen dem Kurbelarm (21, 41) und dem Achsabschnitt (22, 42) um sicherzustellen, dass der Kurbelarm (21, 41) ein Drehmoment auf den Achsabschnitt (22, 42) übertragen kann, **gekennzeichnet durch** Anwenden eines Haftmaterials (50) in einer Klebekammer (31; 31'; 31"), die in dem Kurbelarm (21, 41) und/oder dem Achsabschnitt (22, 42) ausgebildet ist.

20. Verfahren nach Anspruch 19, bei dem das Haftmaterial (50) auf den Kurbelarm (21, 41) oder den Achsabschnitt (22, 42) aufgebracht wird, bevor diese in Eingriff gebracht werden, worauf der Kurbelarm (21, 41) und der Achsabschnitt (22, 42) in axialer Richtung kraftschlüssig verbunden werden.

21. Verfahren nach Anspruch 19, bei dem das Haftmaterial (50) ein aushärtendes Harz ist.

22. Verfahren nach Anspruch 21, bei dem das aushärtende Harz ein durch Wärme aushärtendes Harz, wie etwa Epoxy- oder Phenolharz ist.

23. Verfahren nach Anspruch 19, bei dem wenigstens ein Spanbrechkanal (31"') in dem Kopplungssitz (23) ausgebildet wird.

24. Verfahren nach Anspruch 23, bei dem ein Rillenprofil durch spanabhebende Bearbeitung in dem Kopplungssitz (23) ausgebildet wird.

25. Verfahren nach Anspruch 24, bei dem die spanabhebende Bearbeitung ein Vorgang ist, der mit einer Räumnadel ausgeführt wird.

## Revendications

1. Ensemble de bras de manivelle pour bicyclette (20, 40), comprenant au moins une partie d'axe (22, 42), un bras de manivelle (21, 41) monté sur ladite au moins une partie d'axe (22, 42), le bras de manivelle (21, 41) comportant une base d'accouplement (23) et la partie d'axe (22, 42) comportant une partie d'accouplement (24) couplée à la base d'accouplement (23), la base d'accouplement (23) et la partie d'accouplement (24) étant façonnées de façon à former un accouplement par forme pour garantir que le bras de manivelle (21, 41) peut transmettre un couple à la partie d'axe (22, 42) et un matériau adhésif prévu entre la base d'accouplement (23) et la partie d'accouplement (24), **caractérisé en ce que** le matériau adhésif est prévu dans une chambre de collage (30, 31 ; 31' ; 31 ") formée dans au moins un élément de ladite base d'accouplement (23) et de ladite partie d'accouplement (24).

2. Ensemble selon la revendication 1, dans lequel la base d'accouplement (23) comprend un épaulement (28) destiné à supporter la partie d'axe (22, 42) dans un sens axial.

3. Ensemble selon la revendication 2, dans lequel l'épaulement (28) enferme totalement la base d'accouplement (23) dans la direction axiale.

4. Ensemble selon la revendication 1, dans lequel le matériau adhésif (50) scelle complètement la partie d'accouplement (24) à la base d'accouplement (23).

5. Ensemble selon la revendication 1, dans lequel ledit matériau adhésif (50) est présent à la fois dans ladite chambre de collage (30, 31 ; 31' ; 31 "), et au moins dans une partie d'un espace restant (51) entre la base d'accouplement (23) et la partie d'accouplement (24).

6. Ensemble selon la revendication 1, dans lequel ladite chambre de collage comprend un canal annulaire (31 ; 31 ") dans le bras de manivelle (21, 41), formé dans la base d'accouplement (23), et/ou un canal annulaire (31') dans la partie d'axe (22, 42), formé dans la partie d'accouplement (24).

7. Ensemble selon la revendication 6, dans lequel le canal annulaire (31 ; 31') est situé dans un sens axial à une position distante par rapport à un centre (K) du jeu de pédalier (10).

8. Ensemble selon la revendication 1, dans lequel ladite chambre de collage comprend un espace libre (30), laissé libre entre la base d'accouplement (23) et la partie d'accouplement (24) par une zone frontale amincie (29) de la partie d'accouplement (24) elle-même.

9. Ensemble selon la revendication 8, dans lequel ladite zone frontale amincie (29) comporte une extension axiale inférieure ou égale à 1/3 d'une extension axiale de la partie d'accouplement (24).

10. Ensemble selon la revendication 8, dans lequel ladite zone frontale amincie (29) comporte une extension axiale égale à 2 à 5 mm.

11. Ensemble selon la revendication 1, dans lequel le matériau adhésif (50) est une résine durcissable.

12. Ensemble selon la revendication 11, dans lequel la résine durcissable (50) est une résine thermodurcissable telle qu'une résine époxy ou phénolique.

13. Ensemble selon la revendication 1, comprenant en outre un moyen de fixation pour garantir que le moyen d'accouplement reste engagé avec le bras de manivelle (21, 41) et la partie d'axe (22, 42), le moyen de fixation comprenant un matériau adhésif (50).

14. Ensemble selon la revendication 13, dans lequel le moyen de fixation comprend en outre une compression mécanique de la partie d'accouplement (24) de la partie d'axe (22, 42) dans la base d'accouplement (23) du bras de manivelle (21, 41).

15. Ensemble selon la revendication 1, dans lequel la base d'accouplement (23) comprend au moins un canal à gorge (31"').

16. Ensemble selon la revendication 15, dans lequel la base d'accouplement comprend un profil rainuré (25) et le canal à gorge (31"') est plus profond que les rainures dudit profil rainuré (25).

17. Ensemble selon la revendication 15, dans lequel la base d'accouplement s'étend entre une paroi latérale extérieure (60) du bras de manivelle (21) et un épaulement (28) supportant la partie d'axe (22, 42) dans un sens axial, et dans lequel le canal à gorge (31'") est plus proche dudit épaulement (28) que de ladite paroi latérale extérieure (60).

18. Ensemble selon la revendication 17, dans lequel la distance entre le canal à gorge (31"') et l'épaulement (28) se situe entre 1 et 15 mm.

19. Procédé d'assemblage d'un bras de manivelle (21, 41) à une partie d'axe (22, 42) d'un jeu de pédalier (10) d'une transmission de bicyclette, comprenant un accouplement par forme entre le bras de manivelle (21, 41) et la partie d'axe (22, 42) pour garantir que le bras de manivelle (21, 41) peut transmettre un couple à la partie d'axe (22, 42), **caractérisé par** l'application d'un matériau adhésif (50) dans une chambre de collage (31 ; 31' ; 31 "), formée dans au moins un élément parmi le bras de manivelle (21, 41) et la partie d'axe (22, 42).

20. Procédé selon la revendication 19, dans lequel le matériau adhésif (50) est appliqué à un élément parmi le bras de manivelle (21, 41) et la partie d'axe (22, 42) avant qu'ils ne soient engagés, après quoi le bras de manivelle (21, 41) et la partie d'axe (22, 42) subissent une compression dans le sens axial.

21. Procédé selon la revendication 19, dans lequel le matériau adhésif (50) est une résine durcissable.

22. Procédé selon la revendication 21, dans lequel la résine durcissable (50) est une résine thermodurcissable, telle qu'une résine époxy ou phénolique.

23. Procédé selon la revendication 19, dans lequel au moins un canal à gorge (31"') est réalisé dans la base d'accouplement (23).

24. Procédé selon la revendication 23, dans lequel un profil rainuré est réalisé par une opération d'usinage par machine dans la base d'accouplement (23).

25. Procédé selon la revendication 24, dans lequel l'opération d'usinage par machine est une opération de brochage.
